Europäisches Patentamt

(19) European Patent Office

Office européen des brevets

(11) Publication number: **0 062 680**

**B1**

(12) **EUROPEAN PATENT SPECIFICATION**

(45) Date of publication of patent specification: **22.01.86**

(21) Application number: **81902818.4**

(22) Date of filing: **14.10.81**

(86) International application number:
**PCT/JP81/00283**

(87) International publication number:
**WO 82/01447 29.04.82 Gazette 82/11**

(51) Int. Cl.⁴: **H 02 K 9/04**

(54) **COOLING UNIT FOR A NORMAL AND REVERSELY ROTATABLE MOTOR.**

(30) Priority: **15.10.80 JP 142883/80**

(43) Date of publication of application:
**20.10.82 Bulletin 82/42**

(45) Publication of the grant of the patent:
**22.01.86 Bulletin 86/04**

(84) Designated Contracting States:
**DE FR GB**

(56) References cited:
**GB-A- 17 110**
**GB-A- 584 535**
**JP-A-51 021 107**
**JP-A-52 070 303**
**JP-B-48 044 962**
**JP-U-51 079 609**
**JP-Y-41 014 012**
**US-A-1 751 424**
**US-A-3 075 105**

**PATENT ABSTRACTS OF JAPAN, vol. 4, no. 104 (E-19) (586) 25 July 1980**

**PATENT ABSTRACTS OF JAPAN, vol. 4, no. 126, (E-24) (608) 5 September 1980**

(73) Proprietor: **FANUC LTD**
**3580, Shibokusa Aza-Komanba Oshino-mura**
**Minamitsuru-gun Yamanashi 401-05 (JP)**

(72) Inventor: **OYAMA, Shigeaki**
**939-82, Katakura-cho**
**Hachioji-shi Tokyo 192 (JP)**
Inventor: **NAKAMURA, Kosei**
**1-2-8, Asahigaoka**
**Hino-shi Tokyo 191 (JP)**
Inventor: **HAYASHI, Yoshiyuki**
**3-11-4, Tamadaira**
**Hino-shi Tokyo 191 (JP)**
Inventor: **KOYOSHIDA, Shigeru**
**1-7-1, Honmachi Omuta-shi**
**Fukuoka 836 (JP)**

(74) Representative: **Blumbach Weser Bergen**
**Kramer Zwirner Hoffmann Patentanwälte**
**Radeckestrasse 43**
**D-8000 München 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a device for cooling motors, and more particularly to the improvement in the construction of a device for cooling motors which run in both forward and reverse directions, so that the cooling can be expelled more efficiently.

## Background Art

In order to radiate the heat that is generated by iron losses, copper losses and the like when the motor is operated continuously, a known cooling device consists of permitting the rotary shaft of a motor to protrude into a cooling chamber that is formed on the outside of the motor case, attaching blade-type cooling fins to the protruded portion in a radial manner to form a vane wheel, forming an exhaust hole in the central portion of the rear wall of the cooling chamber (hereinafter, the side of the motor case is referred to as the front direction relative to the cooling chamber, and the opposite side is referred to as the rear direction), and permitting the cooling air taken in from the front direction of the cooling chamber to pass through the blade-type cooling fins and be expelled rearwards in the axial direction through the exhaust hole, so that the generated heat is radiated. In order to enhance the cooling effect, furthermore, it has also been attempted to mount the exhaust blower on the rear wall of the cooling chamber by some means so that the blower faces the exhaust hole, and so that the blower may cooperate, together with the blade-type fins, to intensify the flow of cooling air.

The above-mentioned cooling devices, however, have been constructed based on an idea that the motor, i.e., the blade-type cooling fins, and the exhaust blower rotate in the same direction.

In recent years, motors that serve as actuators have been finding a diversified range of applications accompanying the development in industrial machinery. Among such applications, a motor which is capable of running in either the forward direction or the reverse direction without reversible means has been frequently employed.

If the conventional cooling device is adapted to the reversible motor, the stream of cooling air produced by the blade-type fins reversely acts upon the stream of air that is produced by the vanes of the exhaust blower when the motor is reversely rotated, i.e. when the blade-type cooling fins are rotated in the direction opposite to the running direction of the exhaust blower. Therefore, rotation of the exhaust blower is hindered or is often stopped, making it difficult to smoothly expel the cooling air. This phenomenon is described below in further detail. The air stream created by the blade-type cooling fins flows in a spiral manner accompanying the rotation of the cooling fins, i.e., flows in a whirling manner, and is expelled in the axial direction. Therefore, when the cooling fins rotate in the same direction as the exhaust blower, the spiral flow of the air stream so works as to impart a rotational force to the vanes of the exhaust blower. On the other hand, when the blade-type cooling fins are rotated in the reverse direction, the direction of spiral flow of the cooling air stream is reversed, and reversely acts upon the vanes of the exhaust blower, so that the rotation of the exhaust blower is hindered giving rise to the occurrence of trouble. To solve this problem, therefore, it is most desirable to rectify the spiral flow, or whirling flow, of the air stream created by the blade-type cooling fins into a linear flow so that it is expelled by the exhaust blower.

A device for cooling a reversible motor is known in accordance with the prior art portion of claim 1 (JP—A—55 79654) in which the air inlet port is provided at the side opposite to said protruded portion of the rotary shaft whereas the air outlet port is provided at the side of the motor case at a circumferential portion thereof. In this prior art cooling device cooling air is sucked by the blower means into the cooling chamber where the cooling fins expel the air through the air outlet port. Due to such a construction it is not possible to produce a stream of cooling air within the motor case of the motor, i.e. to cool the motor directly. US—A—1 751 424 discloses a ventilating arrangement for dynamo-electric machines which comprises a cooling chamber having an air inlet port at the side of the motor case and an air outlet port provided radially with respect to the cooling fins radially attached to the rotary of the motor. Radially with respect to the cooling chamber there is provided an auxiliary vane. However, with such a construction it is not possible to efficiently cool the rotary shaft of the motor when it is necessary to provide the air outlet port at the side opposite to the protruded portion of the rotary shaft.

## Disclosure of the Invention

The object of the present invention is to provide a device for cooling a reversible motor, which device has an improved construction to direct the flow of the cooling air so that a good cooling effect can be obtained when the motor is running either in the forward direction or in the reverse direction, and which can be simply and cheaply constructed.

According to the characterizing portion of claim 1 the present invention achieves the above mentioned object by providing directing means by which the cooling air is directed in the axial direction. A linear flow of cooling is achieved, and such a linear flow of air can easily be expelled by the blower means. Since the air inlet port is provided at the side of the motor case a stream of cooling air can be produced from the side of the motor case opposite to the cooling chamber through the motor case and into the air inlet port. Thus, cooling efficiency can be improved.

## Brief Explanation of Drawings

Figs. 1 and 2 illustrate an AC motor equipped with a cooling device according to an embodiment of the present invention, where Fig. 1 is a longitudinal sectional view along the line B—B of Fig. 2, and Fig. 2 is a transverse sectional view along the line A—A of Fig. 1;

Figs. 3 and 4 illustrate another embodiment according to the present invention, where Fig. 3 is a partly cut-away longitudinal sectional view along the line D—D of Fig. 4, and Fig. 4 is a transverse sectional view along the line C—C of Fig. 3.

Best Mode for Carrying Out the Invention

The invention will be described below in further detail with reference to the embodiments shown in the accompanying drawings.

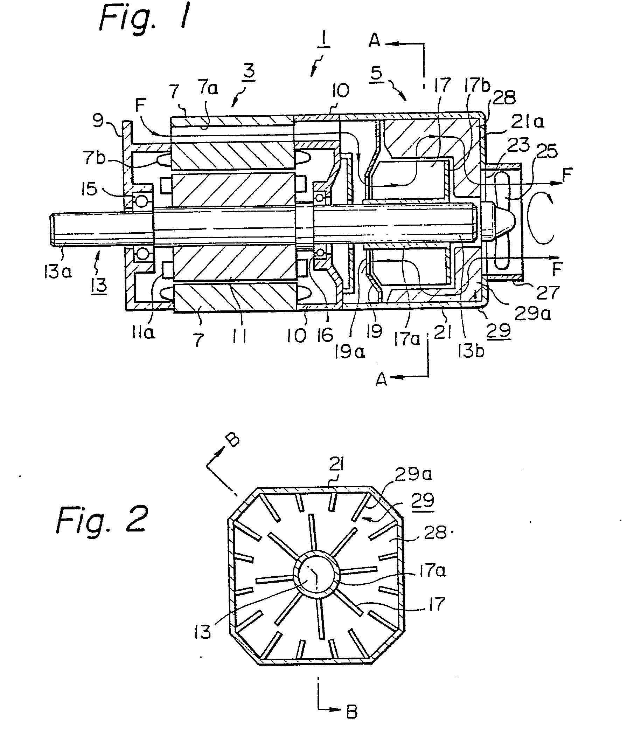

Figs. 1 and 2 illustrate an AC motor equipped with a cooling device according to an embodiment of the present invention, where Fig. 1 is a longitudinal sectional view along the line B—B of Fig. 2, and Fig. 2 is a transverse sectional view along the line A—A of Fig. 1. In the drawings, reference numeral 1 denotes a motor which is equipped with a cooling device, and which consists of a rotary drive unit 3 and a cooling chamber 5. A stator 7 has a continuous and unitary structure along the outer periphery in the radial direction, serves as a yoke, has a winding 7b, surrounds a rotor 11 maintaining a small air gap, and supports motor cases 9, 10 by suitable fixing means at both ends thereof in the axial direction. The stator 7 further has a plurality of elongated holes 7a that penetrate therethrough in the axial direction. The elongated holes 7a are communicated with the cooling chamber 5, work to take in the cooling air from the outside of the motor, and constitute a cooling device for the stator 7. The rotor 11, in which an end ring 11a is inlaid, is mounted on a rotary shaft 13 and is supported together with the rotary shaft 13 by bearings 15, 16 of the motor cases 9, 10 to rotate in either direction. The front end of the rotary shaft 13, that serves as an output shaft 13a, protrudes forwards beyond the motor case 9 so as to be coupled to various devices (not shown) that are to be driven, and the rear end thereof protrudes backwards beyond the motor case 10, i.e., protrudes into the cooling chamber 5. A plurality of blade-type cooling fins 17 are mounted on the rear protrusion 13b via a sleeve 17a to constitute a vane wheel. Further, a circular cooling air guide board 17b is attached to the rear ends of the blade-type cooling fins 17 to guide the cooling air in the direction of arrow F. A cooling air guide wall 19, with opening 19a to introduce the cooling air, is provided in front of the cooling fins 17 maintaining a small gap in the axial direction, and maintaining a suitable gap in the radial direction relative to the outer periphery of the rotary shaft 13, such that the cooling air is taken in from the inner side of the cooling fins 17 in the radial direction, as indicated by arrow F. Here, the blade-type cooling fins 17, sleeve 17a and circular cooling air guide board 17b may be formed beforehand as a unitary structure, using a material having a good heat conductivity, such as aluminum plate. A fin cover 21, covering the outer peripheries in the radial direction and in the axial directions of the blade-type cooling fins 17, is mounted by suitable means on the motor case 10 to form an outer wall of the cooling chamber 5. An exhaust hole 23, having a diameter nearly the same as the diameter of the blade-type cooling fins 17, is formed in the outer wall of the fin cover 21 in the axial direction, i.e., formed in the end wall 21a of the cooling chamber 5, being opposed to the cooling fins 17. An exhaust blower 25 for expelling the cooling air is mounted by suitable fixing means on the fin cover 21 at a position opposed to the exhaust holes 23, i.e., at the back of the rear protrusion 13b of the rotary shaft 13, and a cylindrical guide cover 27 is mounted on the fin cover 21 to cover the circumference of the exhaust blower 25. The guide cover 27 works to guide the flow of cooling air expelled by the exhaust blower 25 toward the outside of the device in the axial direction.

The exhaust blower 25 may be a customarily employed one, and its electric circuit (not shown) for driving is constructed independently of the electric circuit (not shown) of the motor 1; i.e., the exhaust blower 25 rotates in a predetermined direction at all times, irrespective of the running direction of the motor 1. Even when the cooling fins 17 are running at low speeds or are at rest, the cooling air is taken in and is expelled by the exhaust blower to maintain a good cooling effect.

Moreover, a fixed directing vane 29, consisting of a plurality of guide vanes 29a, is mounted on the fin cover 21 in the space 28 between the blade-type cooling fins 17 and the exhaust blower 25, maintaining a small gap relative to the periphery in the radial direction of the rear protrusion 13b of the rotary shaft 13, the guide vanes 29a being arrayed in the radial direction of the cooling chamber 5. The guide vanes 29a of the fixed directing vane 29 are made of a thin plate, and are arrayed to be parallel with the axis of the rotary shaft 13, as shown in Figs. 1 and 2. The distance among the guide vanes 29a is suitably determined depending upon the size of the motor, rate of blowing the cooling air, and capacity of the exhaust blower 25. By forming the fixed rectifying vane 29 as mentioned above, the transverse section of the space 28 is radially divided by the guide vanes 29a; the thus divided spaces guide the cooling air to flow in the axial direction, but not in the rotating direction. Therefore, the whirling stream of cooling air, created by the blade-type cooling fins 17 which run either in the forward direction or in the reverse direction, is exactly rectified in the axial direction by the fixed directing vane 29, and is guided to the exhaust blower 25. Since the cooling air is thus rectified in the axial direction, rotation of the blower 25 is not interrupted irrespective of whether the rotary shaft 13 turns in the forward direction or in the reverse direction, and the cooling air is expelled efficiently.

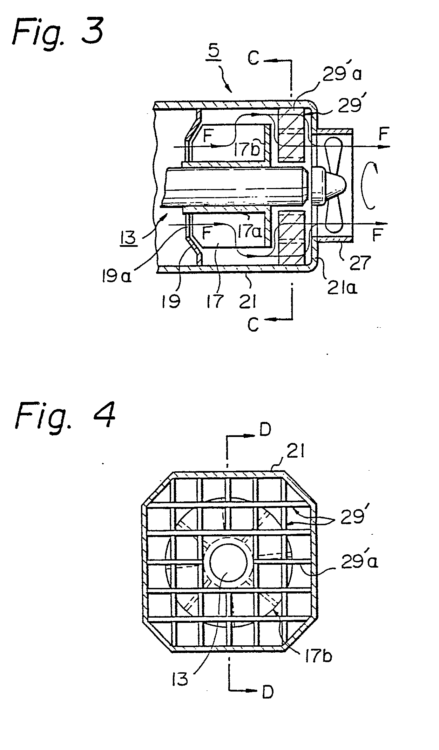

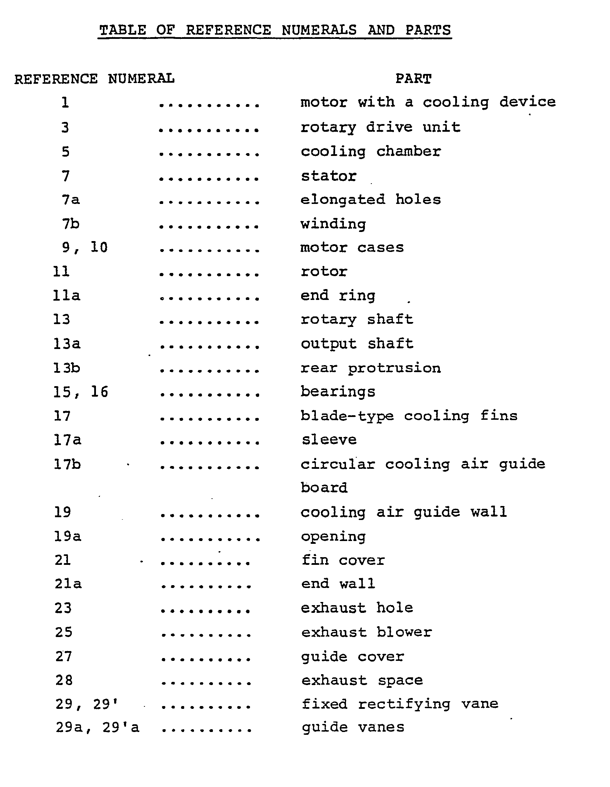

Figs. 3 and 4 illustrate a motor equipped with a cooling device according to another embodiment of the present invention, where Fig. 3 is a partly cut-away longitudinal sectional view along the line D—D of Fig. 4, and Fig. 4 is a transverse sectional view along the line C—C of Fig. 3. In these drawings, the same reference numerals as those of Figs. 1 and 2 denote the same members as those of Figs. 1 and 2. In this embodiment, the fixed rectifying vane 29' consists of guide vanes 29'a that are arrayed like a grid, and the space 28 is divided into square cylinders in the axial direction to produce the same effects as the above-mentioned embodiment.

Being constructed as mentioned above, the cooling device of the present invention efficiently guides the cooling air in the direction indicated by arrow F irrespective of whether the motor runs in the forward direction or in the reverse direction. Furthermore, the cooling device of the present invention can be simply and cheaply constructed.

## Claims

1. A device for cooling a reversible motor, comprising a cooling chamber (5) arranged adjacent to a motor case of said motor (1), a rotary shaft (13) of the motor protruding from said motor case into said cooling chamber (5), blade-type cooling fins (17) radially attached to said protruding portion of the rotary shaft (13) and housed in said cooling chamber (5), said cooling chamber having an air inlet port and an air outlet port and blower means (25), so that the cooling air introduced from said air inlet port passes said cooling fins to cool said rotary shaft and is expelled through said air outlet port in the axial direction, characterized in that the air inlet port (19a) is provided at the end of the cooling chamber adjacent to the motor case, the air outlet port (23) is provided at the opposite end of the cooling chamber, the blower means (25) is provided in said air outlet port, a space (28) in the axial direction is formed between said blade-type cooling fins (17) and said air outlet port (23), and stationary air directing means (29; 29'), consisting of a plurality of guide vanes (29a; 29a') extending in the axial direction within said cooling chamber (5), are provided in said space, so that the cooling air, which otherwise would be swirling, is directed along the axial direction by said air directing means regardless of the direction of rotation of the rotary shaft (13) and, thus, the air is expelled by said blower means (25) toward the outside of said cooling chamber.

2. A device as set forth in claim 1, wherein a circular air guide board (17b) is fastened to the rear ends of said blade-type cooling fins (17) so that the cooling air passed through said blade-type cooling fins (17) is deflected radially outward in the cooling chamber (5) and, then, the deflected air passes through the stationary air directing means (29, 29').

3. A device as set forth in claim 1, wherein the guide vanes (29a) of said directing means (29) are radially extended to the inner peripheral wall of said cooling chamber and a part of each said guide vane is extended to an annular space defined between said blade-type cooling fins (17) and said inner peripheral wall (21) of the cooling chamber (5).

4. A device as set forth in claim 2, wherein the guide vanes (29a') of said directing means (29') are arranged in parallel to each other and intersect each other at right angles so as to form a lattice or grid. (Fig. 3, 4).

## Patentansprüche

1. Einrichtung zum Kühlen eines Umkehrmotors, umfassend eine angrenzend an ein Motorgehäuse des Motors (1) angeordnete Kühlkammer (5), eine aus dem Motorgehäuse in die Kühlkammer (5) vorstehende Drehwelle (13) des Motors, radial an dem vorstehenden Abschnitt der Drehwelle (13) angebrachte und in der Kühlkammer (5) aufgenommene blattförmige Kühlrippen (17), wobei die Kühlkammer eine Lufteinlaß und einen Luftauslaß und eine Gebläseanordnung (25) besitzt, so daß die von dem Lufteinlaß eingeführte Kühlluft die Kühlrippen passiert, um die Drehwelle zu kühlen, und durch den Luftauslaß in axialer Richtung ausgestoßen wird, dadurch gekennzeichnet, daß der Lufteinlaß (19a) an demjenigen Ende der Kühlkammer, welches dem Motorgehäuse benachbart ist, vorgesehen ist, daß der Luftauslaß (23) an dem entgegengesetzten Ende der Kühlkammer vorgesehen ist, daß die Gebläseanordnung (25) in dem Luftauslaß vorgesehen ist, daß zwischen den blattförmigen Kühlrippen (17) und dem Luftauslaß (23) in axialer Richtung ein Raum (28) gebildet ist und in dem Raum eine ortsfeste Luftrichteinrichtung (29; 29'), bestehend aus mehreren Leitflügeln (29a; 29a'), die sich in der Kühlkammer (5) in axialer Richtung erstrecken, vorgesehen sind, so daß axialer Richtung erstrecken, vorgesehen sind, so daß Kühlungsluft, die ansonsten wirbeln würde, von der Lufteinrichtung ungeachtet der Drehrichtung der Drehwelle (13) längs der Axialrichtung gerichtet und mithin die Luft von der Gebläseanordnung (25) aus der Kühlkammer ausgestoßen wird.

2. Einrichtung nach Anspruch 1, dadurch gekennzeichnet, daß an den rückwärtigen Enden der blattförmigen Kühlrippen (17) eine kreisförmige Luftführungsplatte (17b) befestigt ist, so daß die an den blattförmigen Kühlrippen (17) vorbeigestrichene Luft radial nach außen in die Kühlkammer (5) abgelenkt wird und anschließend die abgelenkte Luft durch die ortsfeste Luftrichteinrichtung (29; 29') gelangt.

3. Einrichtung nach Anspruch 2, dadurch gekennzeichnet, daß die Leitflügel (29a) der Luftrichteinrichtung (29) sich radial zu der inneren Umfangswand der Kühlkammer erstrecken, und daß ein Teil jedes Leitflügels sich zu einem Ringraum erstreckt, der zwischen den blattförmigen Kühlrippen (17) und der inneren Umfangswand (21) der Kühlkammer (5) gebildet ist.

4. Einrichtung nach Anspruch 2, dadurch gekennzeichnet, daß die Leitflügel (29a') der Richteinrichtung (29') parallel zueinander angeordnet sind und sich unter Bildung eines Gitters oder Netzes unter rechten Winkeln schneiden. (Fig. 3,

4).

## Revendications

1. Dispositif de refroidissement d'un moteur réversible, comportant une chambre de refroidissement (5) disposée près d'un carter moteur du dit moteur (1), un arbre tournant (13) du moteur se prolongeant depuis le dit carter moteur dans le dite chambre de refroidissement (5), des ailettes de refroidissement (17) du type palettes fixées radialement à la dite portion prolongée de l'arbre tournant (13) et logées dans la dite chambre de refroidissement (5), la dite chambre de refroidissement présentant un orifice d'entrée et un orifice de sortie d'air et un ventilateur (25), de façon qu' l'air de refroidissement introduit, en provenance de l'orifice d'entrée d'air, passe le long des dites ailettes de refroidissement pour refroidir le dit arbre tournant et soit extrait à travers le dit orifice de sortie d'air dans la direction axiale, caractérisé en ce que l'orifice d'entrée d'air (19a) est prévu à l'extrémité de la chambre de refroidissement voisine du carter moteur, en ce que l'orifice de sortie d'air (23) est prévu à l'extrémité opposé de la chambre de refroidissement, en ce que le ventilateur (25) est prévu dans le dit orifice de sortie d'air, en ce qu'un espace (28) dans la direction axiale est formé entre les dites ailettes de refroidissement (17) du type palettes et le dit orifice de sortie d'air (23) et en ce que des moyens fixes directionnels pour l'air (23; 29'), constitués d'un certain nombre d'aubes de guidage (29a; 29') s'étendant dans la direction axiale à l'intérieur de la dite chambre de refroidissement (5) sont prévus dans le dit espace, de façon que l'air de refroidissement, qui autrement tourbillonnerait, soit dirigé selon la direction axiale par les dits moyens directionnels pour l'air, indépendamment du sens de rotation de l'arbre tournant (13) et donc que l'air soit extrait par la dit ventilateur (25) en direction de l'extérieure de la dite chambre de refroidissement.

2. Dispositif comme indiqué dans la revendications 1, où un panneau circulaire de guidage de l'air (17b) est fixé aux extrémités arrière des dites ailettes de refroidissement (17) du type palettes de façon que l'air de refroidissement qui a passé le long des ailettes de refroidissement (17) du type palettes soit dévié radialement vers l'extérieur dans la chambre de refroidissement (5) puis que l'air dévié passe à travers les moyens fixes directionnels pour l'air (29, 29').

3. Dispositif comme indiqué dans la revendication 2, où les aubes de guidage (29a) des dits moyens directionnels (29) s'étendent radialement jusqu'à la paroi périphérique interne de la dite chambre de refroidissement et où une partie de chacune des dites aubes de guidage s'étend jusqu'à l'espace annulaire défini entre les dites ailettes de refroidissement (17) du type palettes et la dite paroi périphérique interne (21) de la chambre de refroidissement (5).

4. Dispositif comme indiqué dans la revendication 2, où les aubres de guidage (29a') des dits moyens directionnels (29') sont disposées parallèlement l'une à l'autre et se coupent l'une l'autre à angle droit de façon à former un treillis ou un grille (figures 3, 4).

Fig. 1

Fig. 2

*Fig. 3*

*Fig. 4*

**0 062 680**

TABLE OF REFERENCE NUMERALS AND PARTS

| REFERENCE NUMERAL | | PART |
|---|---|---|
| 1 | .......... | motor with a cooling device |
| 3 | .......... | rotary drive unit |
| 5 | .......... | cooling chamber |
| 7 | .......... | stator |
| 7a | .......... | elongated holes |
| 7b | .......... | winding |
| 9, 10 | .......... | motor cases |
| 11 | .......... | rotor |
| 11a | .......... | end ring |
| 13 | .......... | rotary shaft |
| 13a | .......... | output shaft |
| 13b | .......... | rear protrusion |
| 15, 16 | .......... | bearings |
| 17 | .......... | blade-type cooling fins |
| 17a | .......... | sleeve |
| 17b | .......... | circular cooling air guide board |
| 19 | .......... | cooling air guide wall |
| 19a | .......... | opening |
| 21 | .......... | fin cover |
| 21a | .......... | end wall |
| 23 | .......... | exhaust hole |
| 25 | .......... | exhaust blower |
| 27 | .......... | guide cover |
| 28 | .......... | exhaust space |
| 29, 29' | .......... | fixed rectifying vane |
| 29a, 29'a | .......... | guide vanes |